# EUROPÄISCHE PATENTSCHRIFT

(11) **EP 2 935 068 B1**
(45) Veröffentlichungstag und Bekanntmachung des Hinweises auf die Patenterteilung: **15.02.2017**
(21) Anmeldenummer: 13799597.3
(22) Anmeldetag: 06.12.2013
(51) Int. Cl.: B66B 1/24, B66B 1/30

(54) **STEUERUNGSVERFAHREN SOWIE AUFZUGSANLAGE UND AUFZUGSANLAGENVERBUND**
CONTROL METHOD, AS WELL AS LIFT SYSTEM AND COMBINATION OF LIFT SYSTEMS
PROCÉDÉ DE COMMANDE AINSI QU'INSTALLATION D'ASCENSEUR ET COMPOSITION D'INSTALLATION D'ASCENSEUR

(30) Priorität: 18.12.2012 EP 12197682
(43) Veröffentlichungstag der Anmeldung: 28.10.2015
(73) Patentinhaber: Inventio AG, 6052 Hergiswil (CH)
(72) Erfinder: SONNENMOSER, Astrid, CH-6280 Hochdorf (CH)
(86) Internationale Anmeldenummer: PCT/EP2013/075738
(87) Internationale Veröffentlichungsnummer: WO 2014/095406

(56) Entgegenhaltungen:
- EP-A2- 2 429 053
- WO-A1-2010/086290
- WO-A2-2012/055566

## Beschreibung

Die hier beschriebenen Ausführungsbeispiele betreffen allgemein ein Verfahren zur Steuerung einer Aufzugsanlage. Die hier beschriebenen Ausführungsbeispiele betreffen ausserdem eine Aufzugsanlage und einen Aufzugsanlagenverbund, die an ein Stromversorgungsnetz angeschlossen sind.

Aufgrund umweltpolitischer Überlegungen sind Systeme zur Erzeugung elektrischer Energie im Wandel begriffen. Das klassische Stromversorgungsnetz mit wenigen grossen zentralen Kraftwerken wird im Lauf der Zeit durch ein modernes Stromversorgungsnetz abgelöst, an das dezentral zahlreiche kleinere Energielieferanten angeschlossen sind. Die vom Betreiber des modernen Stromversorgungsnetzes zu lösenden Aufgaben werden dadurch weit komplexer. Die Lieferung erneuerbarer Energien von Energielieferanten, die Wind- und Sonnenenergie nutzen, ist naturgemäss nur beschränkt planbar und unterliegt starken Schwankungen. In der näheren Zukunft wird daher ein Mischbetrieb vorherrschen, bei dem Ausfälle von Energielieferungen alternativer Energieversorger durch Energielieferungen aus konventionellen Kraftwerken kompensiert werden.

Um das Angebot der von den Kraftwerken gelieferten elektrischen Energie mit dem Bedarf an elektrischer Energie im Ausgleich zu halten und die Stabilität und Zuverlässigkeit der Stromversorgungsnetze zu gewährleisten, werden die daran angeschlossenen Energielieferanten und Stromabnehmer vorzugsweise kontinuierlich überwacht. Dazu wird vorzugsweise auch der Lastgang des Stromversorgungsnetzes überwacht, um Zeitzonen mit höherer Belastung zu ermitteln. Gestützt auf den ermittelten Lastgang werden statische elektrische Lasten in kritischen Zeitperioden abgeschaltet, so dass über längere Zeitperioden ein Lastausgleich erreicht werden kann.

Die Zuschaltung und Abschaltung von Lasten erfolgt traditionell durch die Rundsteuerung (engl.: Ripple Control). Im modernen Stromversorgungsnetz, dem so genannten »Smart Grid«, wird die Rundsteuerung durch »Smart Meter« ergänzt, welche es erlauben, den Zustand des Stromversorgungsnetzes zeitnah an zahlreichen Netzknoten zu erfassen. Die Kommunikation der dezentralen Messeinheiten bzw. »Smart Meter« mit einer Zentrale erfolgt vorzugsweise über ein Netzwerk, welches nach den Internetprotokollen arbeitet. Ein Verfahren zur kurzzyklischen Datenerfassung und Steuerung von Messpunkten in einem intelligenten Stromversorgungsnetz, das Smart-Metering- oder Smart-Grid-Funktionen nutzt, ist beispielsweise aus der WO 2012/055566 A2 bekannt.

Wenn nun eine Differenz zwischen dem Angebot und dem Bedarf an Energie auftritt, wird die von den Energielieferanten zur Verfügung gestellte Regelenergie bzw. Regelleistung eingesetzt, um einen Zusammenbruch des Stromversorgungsnetzes bei erhöhtem Bedarf bzw. ein Energieüberschuss bei zu geringer Nachfrage zu vermeiden. Mittels der Regelenergie werden die genannten Differenzen oder Schwankungen im Stromversorgungsnetz kompensiert.

Die zur Verfügung stehende Regelenergie ist in verschiedene Kategorien eingeteilt. Regelenergie, welche innerhalb von Sekunden abgerufen werden kann, wird als Primärreserve bezeichnet. Regelenergie, welche innerhalb einer Minute abgerufen werden kann, wird als Sekundärreserve bezeichnet. Ferner umfasst die Regelenergie Reserveanteile, die nach einer Viertelstunde (Minutenreserve) oder nach Stunden (Stundenreserve) abgerufen werden können.

Bei einer Überbelastung des Stromversorgungsnetzes wird positive Regelenergie bzw. Strom in das Stromversorgungsnetz eingespeist. Bei einem Energieüberschuss wird negative Regelenergie aus dem Stromversorgungsnetz genommen. Für die erforderlichen Leistungsanpassungen werden regelfähige Kraftwerke, wie rasch ansprechende Gasturbinenkraftwerke oder Pumpspeicherkraftwerke, eingesetzt. Nachteilig selbst bei schnell anlaufenden Kraftwerken ist, dass die Einspeisung stets mit einer signifikanten Verzögerung erfolgt. Eine Primärreserve, die praktisch ohne Verzögerung eingesetzt werden kann, steht kaum zur Verfügung. Ferner ist Energie der Primärreserve teuer.

Durch Energiekonsumenten, wie Aufzugsanlagen, die grössere Energien aus dem Stromversorgungsnetz beziehen oder zurück speisen, wird die Regelung des Stromversorgungsnetzes noch anspruchsvoller. Während das Zuschalten oder Abschalten von Geräte mit geringem Energiebedarf aufgrund der hohen Anzahl zumeist gleichmässig verteilt oder aufgrund von Erfahrungen planbar ist, ist dies bei Aufzugsanlagen nicht der Fall. Dynamische Lasten, wie Aufzugsanlagen, können das Stromversorgungsnetz zu beliebigen Tageszeiten oder Nachtzeiten punktuell relativ stark belasten. Sofern beispielsweise eine grössere Reisegruppe bei verschiedenen Hotels zur Nachtzeit eintrifft, wenn der Netzbetreiber keine grösseren Belastungen erwartet, können mehrere Aufzugsanlagen zufälligerweise gleichzeitig betätigt werden, wodurch schlagartig eine hohe Belastung ausgelöst wird. Sofern hingegen ein Energieüberschuss vorliegt und die Aufzugsanlagen zusätzlich Energie ins Stromversorgungsnetz zurück speisen können, muss dies ebenfalls durch die Regelungstechnik des Stromversorgungsnetzes aufgefangen werden. Zu beachten ist, dass zur Kompensation dieser Vorgänge vor allem teure Primärreserven benötigt werden.

Die Präsenz grösserer Energiekonsumenten, wie Aufzugsanlagen mit evtl. mehreren einzelnen Aufzugseinheiten, erfordert daher eine hohe Verfügbarkeit der Regelungskapazitäten des Stromversorgungsnetzes. Insbesondere sind teure Primärreserven vorzusehen.

Es besteht daher ein Bedarf an einer verbesserten Technologie zur vorteilhaften Steuerung einer Aufzugsanlage, um einen energetisch optimierten Betrieb zu ermöglichen, und zur Steuerung eines Transfers von elektrischer Energie über ein Stromversorgungsnetz, an das wenigstens eine Aufzugsanlage mit wenigstens einer Aufzugseinheit angeschlossen ist.

Insbesondere ist ein Verfahren anzugeben, welches erlaubt, die Regelungskapazitäten eines Stromversorgungsnetzes konstant zu halten oder zu reduzieren, an das Aufzugsanlagen angeschlossen sind. Dabei soll insbesondere der Bedarf teurer Primärreserven reduziert werden.

Ferner soll die Stabilität des Stromversorgungsnetzes, z. B. eines modernen Stromversorgungsnetzes (auch als »Smart Grid« bezeichnet), anhand des hier beschriebenen Verfahrens, insbesondere beim Auftreten kurzzeitiger Leistungsschwankungen seitens der Energielieferanten oder Energiekonsumenten, deutlich erhöht werden.

Weiterhin sollen anhand des hier beschriebenen Verfahrens Spitzenbelastungen reduziert werden, ohne dass die Dienstleistungen für die Anwender der Aufzugsanlagen spürbar eingeschränkt werden.

Das Verfahren soll sowohl für den Betreiber des Stromversorgungsnetzes, als auch für den Betreiber der Aufzugsanlagen technische und wirtschaftliche Vorteile bieten.

Ferner sind eine Aufzugsanlage sowie ein Verbund von Aufzugsanlagen anzugeben, die nach dem hier beschriebenen Verfahren arbeiten.

Die in den unabhängigen Patentansprüchen definierte Erfindung löst diese Aufgabe. Weitere vorteilhafte Ausführungen sind in den abhängigen Ansprüchen angegeben.

Ein Aspekt betrifft daher ein Verfahren zur Steuerung wenigstens einer Aufzugsanlage mit wenigstens einer Aufzugseinheit, die an ein Stromversorgungsnetz angeschlossen ist, wobei die

Aufzugsanlage mittels einer zugehörigen Aufzugsteuerung unter Berücksichtigung von ersten Steuerinformationen steuerbar ist, die auf lokalen Anforderungen von Anwendern beruhen. Die Aufzugsteuerung empfängt zweite Steuerinformationen vom Stromversorgungsnetz empfängt, die Zustandsdaten für das Stromversorgungsnetz enthalten. Die ersten und die zweiten Steuerinformationen werden durch die Aufzugsteuerung ausgewertet. Die Aufzugsteuerung beeinflusst einen durch die ersten Steuerinformationen bestimmten Betrieb der Aufzugsanlage in Abhängigkeit der zweiten Steuerinformationen, um einen energetisch optimierten Betrieb zu ermöglichen.

In einem Ausführungsbeispiel werden mindestens eine Beschleunigung einer Aufzugskabine, eine Fahrgeschwindigkeit der Aufzugskabine, ein Startzeitpunkt einer Kabinenfahrt und ein Parallelbetrieb von mehreren Aufzugseinheiten beeinflusst. Zudem kann die Aufzugsteuerung den Betrieb der Aufzugsanlage derart beeinflusst, dass eine Aufzugskabine eine Leerfahrt durchführt, um elektrische Energie aus dem Stromversorgungsnetz aufzunehmen und in der Aufzugsanlage als potentielle Energie zu speichern, oder elektrische Energie ins Stromversorgungsnetz zu speisen. Eine oder mehrere dieser Massnahmen können selektiv je nach Situation durchgeführt werden, wodurch die Flexibilität der Aufzugsanlage erhöht wird.

Ein weiterer Vorteil ist, dass die potentielle Energie in einem generatorischen Betrieb der Aufzugsanlage in elektrische Energie gewandelt wird und entweder ins Stromversorgungsnetz geleitet wird oder ein Energiespeichersystem geladen wird. Das Energiespeichersystem kann zudem vom Stromversorgungsnetz geladen werden. Durch diese Optionen wird die Flexibilität weiter erhöht.

In einem Ausführungsbeispiel wird ein Transfer von elektrischer Energie über ein Stromversorgungsnetz gesteuert, an das wenigstens eine Aufzugsanlage mit wenigstens einer Aufzugseinheit angeschlossen ist, die mittels einer zugehörigen Aufzugsteuerung unter Berücksichtigung von ersten Steuerinformationen steuerbar ist, welche auf lokalen Anforderungen der Anwender beruhen. An das Stromversorgungsnetz ist zudem eine Überwachungseinheit angeschlossen, welche Zustandsdaten für das Stromversorgungsnetz ermittelt und Informationen für die Verbraucher bereitstellt.

In einem Ausführungsbeispiel erstellt die Überwachungseinheit in Abhängigkeit der Belastung des Stromversorgungsnetzes zweite Steuerinformationen für die wenigstens eine Aufzugsteuerung, wonach die Aufzugsanlage entsprechend den ersten und den zweiten Steuerinformationen derart gesteuert wird, dass der Bedarf an Regelenergie für das Stromversorgungsnetz reduziert wird.

Die hier beschriebenen Ausführungsbeispiele des Verfahrens erlauben es, an ein Stromversorgungsnetz angeschlossene Aufzugsanlagen zu nutzen und deren Betrieb zu beeinflussen, um den Betrieb des Stromversorgungsnetzes zu optimieren. Durch entsprechende Steuerung der Aufzugsanlagen, beispielsweise eines Verbundes von zahlreichen Aufzugsanlagen gelingt es nicht nur, Lastspitzen zu vermeiden, sondern vorteilhaft auch Energiekapazitäten der Aufzugsanlagen zu den Zeitpunkten zu nutzen, in denen das Stromversorgungsnetz positive oder negative Regelenergie benötigt, welche nun von den mit dem Stromversorgungsnetz harmonisierten Aufzugsanlagen zur Verfügung gestellt wird.

Besonders vorteilhaft gelingt es, mit den Aufzugsanlagen (vor allem eines Verbundes) wertvolle Energiekapazitäten für die Primärreserve zur Verfügung zu stellen. Positive und negative Regelenergie der Aufzugsanlagen wird somit praktisch ohne Verzögerung mit dem Stromversorgungsnetz ausgetauscht, so dass dieses insbesondere in den kritischen geographischen Zonen mit optimaler Ansprechzeit stabilisiert werden kann.

In einem Ausführungsbeispiel nutzt die Überwachungseinheit des Stromversorgungsnetzes die an das Stromversorgungsnetz angeschlossenen Aufzugsanlagen, um den Bedarf an weiterer Regelenergie zu reduzieren, ohne dass dies für die Nutzer der Aufzugsanlagen erkennbar wird.

Die Aufzugsteuerungen stellen der zentralen Überwachungseinheit vorzugsweise alle Betriebsdaten, wie Daten zum historischen, aktuellen oder zukünftig geplanten Energieverbrauch, zur Verfügung. Der zukünftige Energieverbrauch kann anhand von bereits registrierten Betriebsdaten ermittelt werden.

In einer vorzugsweisen Ausgestaltung melden vorzugsweise alle an das Stromversorgungsnetz angeschlossenen Aufzugsanlagen der Überwachungseinheit die gemäss den ersten Steuerinformationen angeforderten Transporte (Fahrten) sowie vorzugsweise den entsprechend benötigten Energiebedarf. In der Folge steuert die Überwachungseinheit die Transporte derart, dass ein gleichzeitiges Anfahren mehrerer Aufzüge innerhalb des Stromversorgungsnetzes oder Teilen davon vermieden wird. Dabei werden die Transporte derart verteilt, dass über die Zeitperiode, innerhalb der die Transporte auszuführen sind, eine gleichmässige Belastung des Stromversorgungsnetzes erfolgt.

Vorzugsweise werden Zeitfenster vorgesehen, auf die die Transporte vorzugsweise unter Berücksichtigung des Energiebedarfs derart verteilt werden, dass ein Lastausgleich resultiert. Dazu können den angeforderten Transporten Zeitmarken zuordnet und den Aufzugsteuerungen gemeldet werden, welche die entsprechenden Transporte jeweils zu den mit den Zeitmarken bezeichneten Zeitpunkten starten. Unter Berücksichtigung des Energiebedarfs kann beispielsweise auch vorgesehen werden, dass innerhalb eines Zeitfensters nur eine Fahrt mit einem relativ hohen Energiebedarf ausgeführt wird oder zwei Transporte mit einem relativ geringen Energiebedarf ausgeführt werden.

Bei der Zuteilung der Zeitmarken wird vorzugsweise der Standort der Aufzugsanlagen mitberücksichtigt, so dass nicht nur eine zeitliche, sondern auch eine geographische Optimierung der Belastung des Stromversorgungsnetzes resultiert. Während gleichzeitige Transporte von Aufzugseinheiten in grösseren geographischen Abständen zumeist unkritisch sind, kann vermieden werden, dass ein Teil des Leitungsnetzes gleichzeitig durch mehrere Aufzugsanlagen überlastet wird. Damit die Transporte tatsächlich zu den vorgesehenen Zeitpunkten durchgeführt werden, verwenden die Aufzugsteuerungen und die Überwachungseinheit vorzugsweise eine gemeinsame Zeitbasis. Durch diesen für das Stromversorgungsnetz "schonenden" Betrieb der Aufzugsanlagen lassen sich Störungen und Ausfälle innerhalb des gegebenenfalls bereits stark belasteten Stromversorgungsnetzes vermeiden.

Mit den genannten Massnahmen werden zufällige Spitzenbelastungen vermieden, welche von Aufzugsanlagen ansonsten verursacht werden könnten. Dies kann bei der Planung der Regelungskapazität des Stromversorgungsnetzes vorteilhaft berücksichtigt werden. Insbesondere werden dadurch auch Risikofaktoren eliminiert, die ein Glied bei der Verkettung von zufälligerweise gleichzeitig auftretenden und nicht vorhersehbaren Umständen bilden können, welche den Betrieb von Stromversorgungsnetzen von Zeit zu Zeit erheblich stören können.

Wie erwähnt, werden die Energiekapazitäten der Aufzugsanlagen genutzt, um die Verfügbarkeit der Aufzugsanlagen zu gewähren und/oder um den Bedarf an Regelenergie zu reduzieren. Anhand der hier beschriebenen Ausführungsbeispiele des Verfahrens gelingt es, transiente Störungen im Netz, wie kurzfristige Ausfälle einzelner Energielieferanten oder Spitzenbelastungen, zu kompensieren, mit minimaler Beeinflussung des Betriebs der Aufzugsanlagen. Der Verbund der Aufzugsanlagen wird als Energiespeicher und Stromlieferant verwendet, welcher gesteuert von der Überwachungseinheit Regelenergie mit dem Stromversorgungsnetz austauscht.

In einer Phase, in der ein Energieüberschuss vorliegt, werden die Aufzugsanlagen in einem Ausführungsbeispiel vorzugsweise auf ein "höheres" Energieniveau gebracht, so dass bei Bedarf potentielle Energie oder gespeicherte elektrische Energie abgerufen werden kann. Beispielsweise wird die an einem Ende eines Tragmittels befestigte Personenkabine, die im leeren Zustand leichter ist als das am anderen Ende des Tragmittels befestigte Gegengewicht, nach unten in die Endlage gefahren. In dieser Phase verfügt die Aufzugsteuerung typischerweise über eine hohe Autonomie, so dass sie die Vorgänge autonom steuern kann.

Sofern in einer anderen Phase bei hohen Belastungen des Stromversorgungsnetzes mittels der zweiten Steuerinformationen ein Energieengpass signalisiert wird, ermittelt die Aufzugsteuerung vorzugsweise die in den Aufzugseinheiten gespeicherte potentielle oder elektrische Energie und/oder den Energiebedarf für die von den Anwendern angeforderten Transporte. In der Folge werden die Aufzugseinheiten derart gesteuert, dass beispielsweise zuerst die Transporte ausgeführt werden, die einen generatorischen Betrieb der Aufzugsanlage erlauben oder die den geringsten Energiebedarf aufweisen. Vorzugsweise wird von der Aufzugsteuerung auch der parallele Betrieb der Aufzugseinheiten temporär einschränkt. Ferner ist es möglich, die Gewichtslimite für die Aufzugseinheiten zu ändern, um die Belastungen zu reduzieren. In dieser Phase verfügt die Aufzugsteuerung vorzugsweise über eine reduzierte Autonomie, so dass die Überwachungseinheit Betriebsbeschränkungen mit geringer Verzögerung durchsetzen kann.

Beim Ausfall eines Energielieferanten oder bei einer Spitzenbelastung des Stromversorgungsnetzes in einer weiteren Phase wird mittels der zweiten Steuerinformationen ein Energiebedarf signalisiert, wonach die in den Aufzugseinheiten gespeicherte elektrische Energie bedarfsweise abgerufen wird und in das Stromversorgungsnetz gespeist wird. Liegt die gespeicherte Energie als potentielle Energie vor, wird diese in elektrische Energie umgewandelt und in das Stromversorgungsnetz gespeist. In dieser Phase verfügt die Aufzugsteuerung vorzugsweise nur über eine minimale oder keine Autonomie, so dass die Überwachungseinheit die Regelenergie von den Aufzugsanlagen sofort abrufen kann.

Nach der Signalisierung eines Energiebedarfs werden zum Beispiel Leerfahrten der Aufzugseinheiten automatisch durchgeführt, d.h. ausgewählte Aufzugskabinen werden jeweils in das oberste Stockwerk verfahren. Ein Verbund von Aufzugsanlagen kann daher praktisch ohne Verzögerung in den generatorischen Betrieb überführt werden, um positive Regelenergie praktisch verzögerunglos zur Verfügung zu stellen. Von den Nutzern der Aufzugsanlagen wird der Wechsel der Betriebsart hingegen kaum wahrgenommen.

Die Zeit, innerhalb der der Verbund von Aufzugsanlagen Regelenergie mit dem Stromversorgungsnetz austauscht, kann vom Netzbetreiber genutzt werden, um sekundäre Energiereserven von den Energielieferanten abzurufen. Entsprechende Regelverzögerungen werden dabei durch den raschen Einsatz der von den Aufzugsanlagen gelieferten Regelenergie kompensiert.

Vorzugsweise wird für jede Aufzugsanlage ein individuelles Betriebsprotokoll erstellt, welches die Zugriffsberechtigungen der Überwachungseinheit festlegt. Zwischen dem Betreiber des Stromversorgungsnetzwerks und dem Betreiber der Aufzugsanlagen oder des Verbunds der Aufzugsanlagen wird vorzugsweise ein Vertrag erstellt, welche die Zugriffsrechte regelt. Dabei können die Prioritäten der ersten und zweiten Steuerinformationen festgelegt werden. Zum Beispiel kann den zweiten Steuerinformationen eine höhere Priorität zugeordnet werden, so dass der Betreiber des Stromversorgungsnetzes direkten Zugriff zu den gespeicherten Energiereserven erhält und diese unverzüglich abrufen kann. Die Aufzugsteuerung stellt in diesem Fall sicher, dass alle sicherheitsrelevanten Bedingungen erfüllt sind. Umgekehrt kann der Betreiber der Aufzugsanlagen Rechte und Vorbehalte in Betriebsprotokoll festschreiben, um die Durchführung besonders wichtiger Transporte zu gewährleisten. Eine industrielle Unternehmung, ein Hotel und ein Krankenhaus werden daher zumeist unterschiedliche Betriebsprotokolle verwenden. Aufgrund der abgetretenen Rechte wird der Netzbetreiber hingegen Vergünstigungen für die Betreiber der Aufzugsanlagen vergeben. Beispielsweise werden günstigere Tarife oder Rückzahlungen offeriert. Die Aufzugsteuerungen folgen bei der Ausführung der vorliegenden ersten und zweiten Steuerinformationen daher dem festgelegten Betriebsprotokoll.

Ein Teil des Betriebsprotokolls kann dabei vom Betreiber des Stromversorgungsnetzes und vom Betreiber der Aufzugsanlage gemeinsam festgelegt werden. Ein weiterer Teil des Betriebsprotokolls kann vom Betreiber der Aufzugsanlage alleine definiert werden. Insbesondere kann der Betrieb der Aufzugsanlage auch unter Berücksichtigung von nur kommerziell verbindlichen zweiten Steuerinformationen festgelegt werden. Mit den zweiten Steuerinformationen können der Aufzugsteuerung aktuelle oder zukünftige Tarife übermittelt werden, unter Berücksichtigung derer die Steuerung der Aufzugsanlage erfolgen kann.

Bei hohen Tarifen wird in einem Ausführungsbeispiel der Energieverbrauch reduziert. Dazu wird in der Aufzugsanlage vorzugsweise ein zuschaltbarer Energiesparmodus vorgesehen, bei dem die Beschleunigung und die Fahrgeschwindigkeit der Aufzugskabine begrenzt sind. Ferner kann vorgesehen werden, dass Fahrten erst nach einer bestimmten Verzögerung ausgeführt werden. Weiterhin kann der Parallelbetrieb von Aufzugseinheiten unterbunden werden. Die Aufzugsanlage wird daher wiederum anhand der zweiten Steuerinformationen gesteuert, wobei die Steuerung indirekt und mit einer Priorität erfolgt, die vom Betreiber der Aufzugsanlage festgelegt wird. Die hier beschriebene Lösung gibt dem Betreiber der Aufzugsanlage daher maximale Flexibilität und gleichzeitig die Möglichkeit, die Energiekosten zu reduzieren.

Unter Berücksichtigung der übermittelten Tarife kann auch elektrische Energie gespeichert werden, wenn die Energiekosten tief sind, und wieder abgegeben oder genutzt werden, wenn die Tarife höher liegen. Beispielsweise werden die Aufzugsanlagen bei tiefen Tarifen während der Nachtzeit auf das höchste Energieniveau gebracht und/oder vorhandene Energiespeichersysteme werden geladen, so dass die gespeicherte Energie bei erhöhten Tarifen während den Morgenstunden genutzt oder mit Gewinn wieder abgegeben werden kann.

Die sekundären Steuerinformationen können somit zur direkten und indirekten Steuerung der Aufzugsanlage mit wählbarer Priorität verwendet werden.

Die Überwachungseinheit des Stromversorgungsnetzes erfüllt somit die Funktionen eines zentralen Energiemanagementsystems, während die Aufzugsteuerung und/oder ein separates System, das einer Aufzugsanlage zugeteilt ist, ein lokales Energiemanagementsystem bilden, welches den Energieverbrauch und die Energiekosten minimalisiert oder gar einen Gewinn erwirtschaftet.

In weiteren vorzugsweisen Ausgestaltungen werden die Aufzugseinheiten der Aufzugsanlagen mit wenigstens einem Energiespeichersystem versehen oder an ein solches gekoppelt. Das Energiespeichersystem kann somit als Teil einer Aufzuganlage betrachtet werden oder als ein System, das getrennt von einer Aufzuganlage angeordnet ist. Das Energiespeichersystem kann je nach Ausgestaltung an unterschiedlichen Orten angeordnet sein, beispielsweise im Aufzugsschacht oder an anderen Orten in einem Gebäude. Im Energiespeichersystem kann Energie als elektrische Energie (z. B. mit mindestens einem Kondensator), mechanische Energie (z. B. mit mindestens einem Schwungrad) oder chemische Energie (z. B. mit mindestens einer Batterie, Wasserstoff- oder Redox-Flow Zelle) gespeichert werden. Im Folgenden enthält das Energiespeichersystem mindestens eine Batterie, einen Akkumulator oder Kondensator, oder eine Kombination dieser Speicher. Das Energiespeichersystem ist elektrisch mit der Aufzugssteuerung und der Stromversorgung der Aufzugsanlage verbunden. Das Energiespeichersystem kann unterschiedlich geladen werden, d. h. es kann vom Stromversorgungsnetz, der Aufzugseinheit während eines generatorischen Betriebs und/oder einer alternativen Energiequelle (z. B. Photovoltaikanlage oder Windkraftanlage) geladen werden. Das Energiespeichersystems kann auch unterschiedlich entladen werden, d.h. gespeicherte elektrische Energie kann in das Stromversorgungsnetz einspeist und/oder zum Betrieb der Aufzugsanlage oder anderer Verbraucher in einem Gebäude verwendet werden, z. B. während einem Stromausfall. Der aus energetischen Gründen jeweils optimale Einsatz des Energiespeichersystems kann durch ein intelligentes Energiemanagementsystems bestimmt werden.

Im Folgenden sind verschiedene Aspekte der verbesserten Technologie anhand von Ausführungsbeispielen im Zusammenhang mit den Figuren näher erläutert.

Es zeigen:
- **Fig. 1**: ein schematisches Ausführungsbeispiel eines Stromversorgungsnetzes, an das Energielieferanten und mehrere Aufzugsanlagen mit einer zugehörigen Aufzugsteuerung angeschlossen sind, die über ein Kommunikationsnetz mit einer Überwachungseinheit kommunizieren, welche den Zustand des Stromversorgungsnetzes überwacht;
- **Fig. 2**: das Stromversorgungsnetz mit einer Aufzugsanlage, welche mehrere Aufzugseinheiten umfasst; und
- **Fig. 3**: ein Diagramm mit einer beispielhaften Lastkurve des Stromversorgungsnetzes mit exemplarisch gezeigten Lastsituationen.

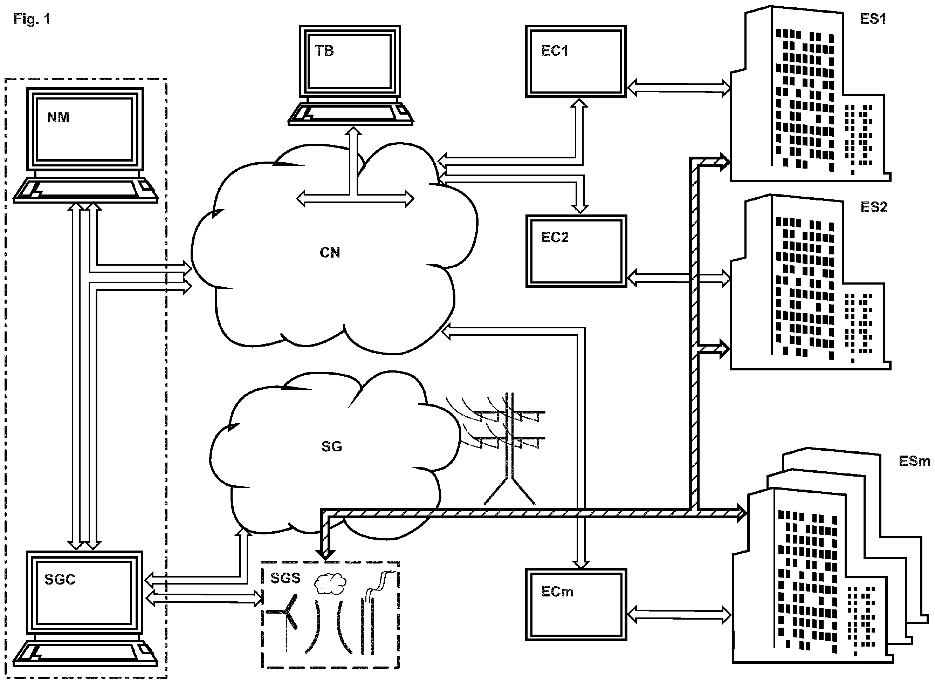

Fig. 1 zeigt ein schematisches Ausführungsbeispiel eines Stromversorgungsnetz SG, an das Energielieferanten/Stromversorger SGS und mehrere in Gebäuden installierten Aufzugsanlagen ES1, ..., ESm mit je einer zugehörigen Aufzugsteuerung EC1, ..., ECm angeschlossen sind. In Fig. 1 sind die Aufzugsteuerungen EC1, ..., ECm zur Vereinfachung ausserhalb der Gebäude gezeigt; es versteht sich jedoch, dass die Aufzugsteuerungen EC1, ..., ECm in den Gebäuden angeordnet sind. Die Aufzugsteuerungen EC1, ..., ECm kommunizieren über ein Kommunikationsnetz CN mit einer Überwachungseinheit NM, welche den Zustand des Stromversorgungsnetzes SG überwacht. Dazu kann die Überwachungseinheit NM direkt auf Messfühler zugreifen, die Messgrössen aus dem Stromversorgungsnetz SG liefern. Diese Messfühler sind in der Nähe der Gebäude oder in den Gebäuden angeordnet und an Gebäude interne Stromnetze gekoppelt. An diese wiederum sind die Aufzugsanlagen ES1, ..., ESm angeschlossen. Die Messfühler haben eine "Smart Meter" Funktionalität. Diese "Smart Meter" Funktionalität kann als eigenständige Einheit ("Smart Meter") oder in einer Aufzugsteuerung EC1, ..., ECm implementiert sein. In den hier beschriebenen Ausführungsbeispielen ist die "Smart Meter" Funktionalität in einer Aufzugsteuerung EC1, ..., ECm implementiert; ein separater "Smart Meter" ist daher in den Figuren nicht gezeigt.

Weiterhin kann die Überwachungseinheit NM bidirektional Daten mit den Aufzugsteuerungen EC1, ..., ECm austauschen und von diesen Informationen, beispielsweise Daten zum Energieverbrauch, einholen. In einem Ausführungsbeispiel kann die Überwachungseinheit NM auch Steuerinformationen an die Aufzugsteuerungen EC1, ..., ECm senden, was nachstehend näher erläutert wird. Ferner kann die Überwachungseinheit NM Daten von einer Netzsteuerung SGC übernehmen, welche das Stromversorgungsnetz SG steuert. Die Überwachungseinheit NM und die Netzsteuerung SGC können auch in einer Einheit zusammengefasst werden.

In einem Ausführungsbeispiel wird der Energieverbrauch und eine Verkehrssituation mit einem Verfahren bestimmt, wie es beispielsweise in WO 2010/086290 beschrieben ist. Dort ist zur Erfassung des Energieverbrauchs mindestens eine Energiemessvorrichtung vorgesehen, die lokal am Energieverbraucher platziert ist. Zur Erfassung der Verkehrssituation werden Signale aus der Aufzugsanlage erfasst und ausgewertet. Ein Sensor erfasst z. B. kabinenspezifische Daten, wie z. B. eine Zuladung einer Aufzugskabine, oder es werden Signale von einer Zielrufsteuerung und/oder Aufzugssteuerung betreffend eine Anzahl Rufe pro Zeiteinheit erfasst. Der erfasste Energieverbrauch und/oder die erfasste Verkehrssituation werden in einem computerlesbaren Datenspeicher abgespeichert, so dass die abgespeicherten Daten für eine spätere Verwendung abrufbar sind. Eine Auswertevorrichtung kann den Energieverbrauch bzw. die Verkehrssituation bestimmen und/oder simulieren, so dass sich mit dem simulierten Energieverbrauch und/oder der simulierten Verkehrssituation bereits vor Installation der Aufzugsanlage ein zukünftiger Energieverbrauchswert ermitteln lässt. Der ermittelte Energieverbrauchswert ist für unterschiedlichste Bezugsgrössen bestimmbar, z. B. als Energieverbrauchswert für genau einen Energieverbraucher oder als Energieverbrauchswert für genau einen Energieverbraucher und für eine bestimmte Zeiteinheit. Als weitere Bezugsgrössen kommen in Betracht: die Aufzugsanlage, die Aufzugsanlage und eine Zeiteinheit, die Aufzugsanlage und eine Verkehrssituation, eine Aufzugskabine, die Aufzugskabine und eine Zeiteinheit. Ebenso lassen sich ein einzelner Passagier, ein Passagier und eine Zeiteinheit oder ein Passagier und eine Verkehrssituation als Bezugsgrösse heranziehen, so dass spezifizierte Energieverbrauchswerte für den Transport eines einzelnen Passagiers zur Verfügung stehen. Entsprechend kommt auch in Betracht, einen Energieverbrauch pro Ruf, pro Fahrt, pro Fahrt und Zeiteinheit, pro Fahrt und Verkehrssituation oder einen Energieverbrauch pro Zone zugrunde zu legen.

In der Überwachungseinheit NM können vorzugsweise alle Daten gebildet und bereitgestellt, die zur Steuerung eines intelligenten Stromnetzes erforderlich sind.

Die Zuschaltung der Stromversorger SGS, die elektrische Energie auf verschiedene Arten erzeugen, an das Stromversorgungsnetz SG wird durch die Netzsteuerung SGC gesteuert, die vom Netzbetreiber kontrolliert wird.

Durch die Kommunikation mit der Netzsteuerung SGC und durch Auswertung der von den Messfühlern ("Smart Meter" Funktionalität) gelieferten Daten erkennt die Überwachungseinheit NM Ausfälle von Energielieferanten, Energieengpässe innerhalb des Stromversorgungsnetzes SG, die auf Ausfälle von Energielieferanten oder eine erhöhte Energieentnahme durch Verbraucher zurückzuführen sind. Die Überwachungseinheit NM zeichnet vorzugsweise den Lastverlauf für alle wesentlichen Teile des Stromversorgungsnetzes auf. Ebenso wird vorzugsweise der Verlauf der Energielieferungen der Energielieferanten SGS überwacht. Über die Netzsteuerung SGC kann die Überwachungseinheit NM mit den Energielieferanten SGS kommunizieren und Energielieferungen längerfristig oder kurzfristig anfordern bzw. den Austausch von Regelenergie veranlassen. Weiterhin holt die Überwachungseinheit NM vorzugsweise Prognosen für zukünftige Energielieferungen ein, um den stabilen Betrieb des Stromversorgungsnetzes SG zu sichern.

Eingangs wurde erwähnt, dass bei der Zuschaltung zahlreicher Energieversorger, deren Stromlieferungen beispielsweise aus erneuerbaren Energien gewonnen werden, eher Instabilitäten auftreten, welche Eingriffe der Überwachungseinheit NM erfordern. Bei Ausfällen einzelner Energielieferanten SGS sind daher vermehrt Regelvorgänge durchzuführen. Dabei besteht das Risiko, dass diese Regelvorgänge nicht schnell genug durchgeführt werden oder die erforderlichen Kapazitäten nicht zur Verfügung stehen.
Fig. 1 illustriert, dass verbraucherseitig zahlreiche grössere Stromkonsumenten, insbesondere Aufzugsanlagen ES1, ..., ESm an das Stromversorgungsnetz SG angeschlossen sind. Auch verbrauchsseitig resultieren daher wesentliche Risiken insbesondere dann, wenn das Stromversorgungsnetz SG nur eine geringe Stabilität aufweist. Durch das nachstehend beschriebene Verfahren werden die Aufzugsanlagen ES1, ..., ESm, die temporär einen relative hohen Energiebedarf aufweisen, und somit traditionell eine Art "Betriebsrisiko" für das Stromversorgungsnetz SG darstellen, derart gesteuert, dass die Stabilität des Stromversorgungsnetzes SG nicht beeinträchtigt, sondern zusätzlich verbessert wird.

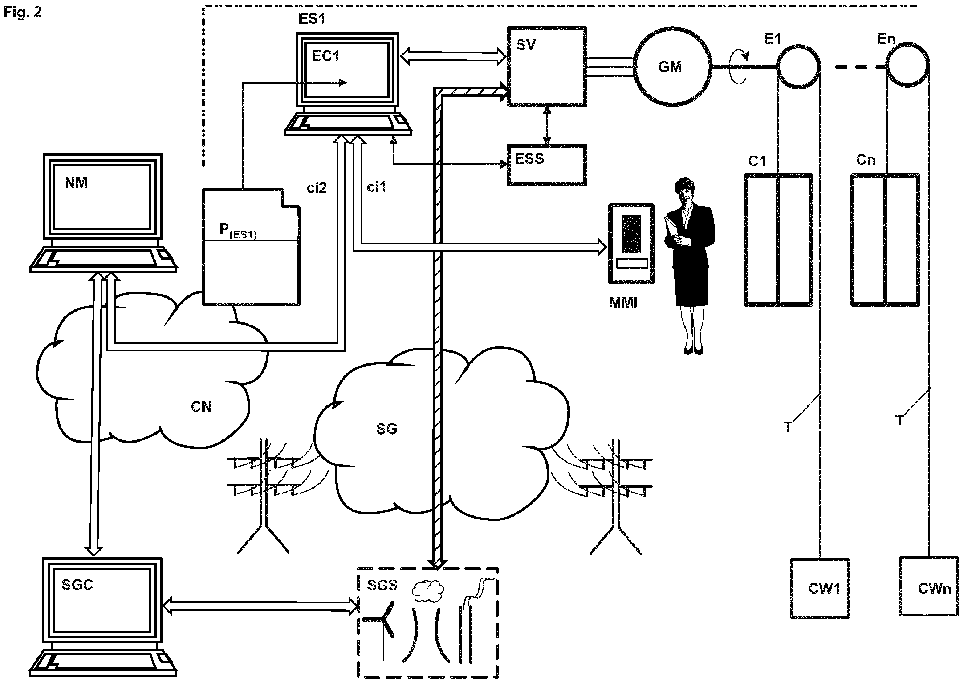

Fig. 2 zeigt das Stromversorgungsnetz SG von Fig. 1 mit einer schematisch gezeigten Aufzugsanlage ES1, welche mehrere Aufzugseinheiten E1, ..., En umfasst. In einem anderen Ausführungsbeispiel kann die Aufzugsanlage ES1 nur eine Aufzugseinheit E1 umfassen.

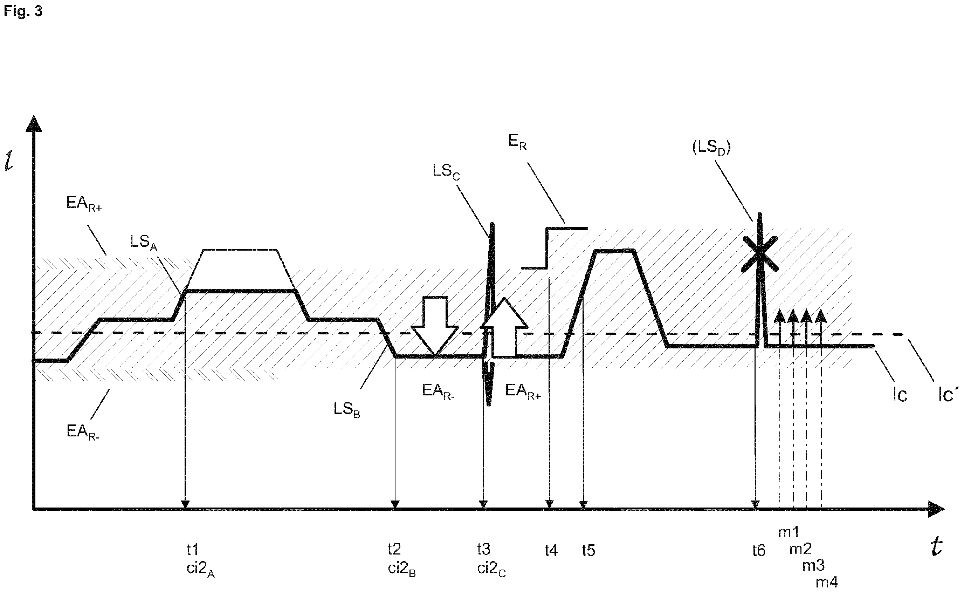

Fig. 3 zeigt ein Diagramm mit einer beispielhaften Lastkurve lc des Stromversorgungsnetzes SG mit exemplarisch gezeigten Lastsituationen LS_{A}, LS_{B}, LS_{C} und LS_{D} als Funktion der Zeit t. Ferner ist die ideale Lastkurve 1c' eingezeichnet, welche bei einer konstanten Belastung des Stromversorgungsnetzes SG parallel zur Abszisse (t) waagerecht verläuft. Bei konstanter Last ist keine Regelung der von den Energielieferanten SGS zugeführten Leistung erforderlich. Die Lastkurve lc zeigt hingegen, dass sich die Belastung des Stromversorgungsnetzes im Lauf des Tages ändert, da Verbraucher zugeschaltet und abgeschaltet werden. Es versteht sich, dass die Lastkurve in einem anderen Ausführungsbeispiel einen anderen Verlauf mit anderen Lastsituationen haben kann.

Für den Zeitpunkt t1 ist eine erste Lastsituation LS_{A} eingezeichnet, innerhalb der eine erhöhte Belastung auftritt. Für den Zeitpunkt t2 ist eine zweite Lastsituation LS_{B} eingezeichnet, innerhalb der die Last stark reduziert wurde und ein Leistungsüberschuss der Energielieferanten vorliegt. Weiter ist eine dritte Lastsituation LS_{C}, nämlich eine Lastspitze, eingetragen, die durch das gleichzeitige Zuschalten mehrerer grösserer Lasten an das Stromversorgungsnetz SG verursacht wurde. Somit treten Differenzen zwischen der zur Verfügung gestellten Leistung und der von den Verbrauchern benötigten Leistung auf, die durch den Einsatz von Regelenergie ER zu kompensieren sind. Die genannten Lastsituationen werden nachstehend diskutiert.

Im Diagramm von Fig. 3 ist der Regelbereich des Stromversorgungsnetzes SG illustriert, d.h. der Bereich, der positive Regelenergie E_{R+} und negative Regelenergie E_{R-} umfasst. Die Höhe der zur Verfügung stehenden Regelenergie ER kann sich im Verlauf des Tages ändern. Zum Zeitpunkt t4 steigt das Potenzial positiver Regelenergie E_{R+} an, was durch das hier beschriebene Verfahren berücksichtigt wird. Da zum Zeitpunkt t5 mehr Regelenergie ER+ zur Verfügung steht, kann eine höhere Belastung leicht kompensiert werden. Im Gegensatz dazu ist der Lastanstieg zum Zeitpunkt t1 eher kritisch, da dieser in den Grenzbereich der zur Verfügung stehenden Regelenergie ER verläuft.

In das Diagramm von Fig. 3 ist ferner eine vierte Lastsituation LS_{D} eingezeichnet, die nachstehend besprochen und durch Anwendung des Verfahrens und mit der Aufzugsanlage ES1 von Fig. 2 oder einem Verbund von Aufzugsanlagen ES1, ..., ESm gemäss Fig. 1 grundsätzlich vermieden wird, weshalb die gezeigte Lastspitze durchgestrichen ist.

Fig. 2 zeigt exemplarisch ein Ausführungsbeispiel einer Aufzugsanlage ES1, die vorzugsweise in den Verbund von mehreren Aufzugsanlagen ES1, ..., ESm gemäss Fig. 1 integriert ist. Die Aufzugsanlage ES1 umfasst hier beispielhaft mehrere Aufzugseinheiten E1, ..., En, die je eine Kabine Ca, ..., Cn und je ein Gegengewicht CW1, ..., CWn aufweisen, die über ein Tragmittel T (Seil oder Flachriemen) miteinander verbunden sind. Die Kabinen C1, ..., Cn stehen für Vertikaltransporte zur Verfügung, die Anwender durch Befehlseingabe (z. B. Eingabe eines Rufs oder eines Zielstockwerkes, jeweils von einem Startstockwerk aus) in eine Schnittstelle MMI anfordern können, welche entsprechende erste Steuerinformationen ci1 an die Aufzugsteuerung EC1 überträgt. Die Befehlseingabe kann in traditioneller Weise durch Betätigung von Druckknöpfen (z. B. "auf"/"ab" Tasten oder Tastenfeld) oder durch Verwendung von Chip Karten oder Smart-Karten erfolgen, um damit beispielsweise in Aufzugsanlagen mit einer Zielrufsteuerung (z. B. einer SchindlerID oder PORT Steuerung der Firma Schindler) einen sogenannten Zielruf einzugeben.

Der Fachmann erkennt, dass die hier beschriebenen Ausführungsbeispiele nicht auf Aufzugsanlagen mit einem Gegengewicht und einem Tragmittel begrenzt sind. In einem anderen Ausführungsbeispiel kann die Aufzugsanlage ES1 so konfiguriert sein, dass kein Gegenwicht benötigt wird, z. B. wenn eine Winde oder eine selbstkletternde Aufzugskabine verwendet werden. In einem weiteren Ausführungsbeispiel können die Aufzugskabinen selbstkletternd sein; in einer solchen Aufzugsanlage werden daher keine Tragmittel benötigt.

Fig. 2 zeigt ausserdem ein Energiespeichersystem ESS, das an die Stromversorgungseinheit SV gekoppelt ist, um von dieser geladen zu werden oder an diese Energie abzugeben. Das Energiespeichersystem ESS ist ausserdem an die Aufzugsteuerung EC1 gekoppelt, damit die Aufzugsteuerung EC1 einen Ladezustand des Energiespeichersystems ESS überwachen kann. Je nach lokalen Gegebenheiten kann das Energiespeichersystem ESS mit einem oder mehreren anderen lokalen Energieerzeugern verbunden sein, z. B. einer Photovoltaikanlage, einer Windkraftanlage (Windrad) oder einer Kombination solcher Anlagen. Das Energiespeichersystem ESS speichert in solchen Fällen auch die von diesen Anlagen erzeugte elektrische Energie. Das Energiespeichersystem ESS kann verschiedenartig ausgestaltet sein, vorzugsweise ist es jedoch ein Speichersystem für elektrische Energie. In einem Ausführungsbeispiel enthält ein solches Speichersystem eine oder mehrere Batterien, Akkumulatoren oder Kondensatoren. Grundsätzlich kann das Energiespeichersystem ESS auch mechanische Energie speichern, beispielsweise mittels eines Schwundrades. Das Energiespeichersystem ESS kann dazu dienen, möglicherweise auftretende Netzspitzen zu reduzieren, oder Energie während einem Stromausfall zu liefern, so dass während dieser Zeit beispielsweise Evakuationsfahrten möglich sind oder der Aufzugsbetrieb aufrecht erhalten werden kann. Zudem kann das Energiespeichersystem ESS auch dazu dienen, wichtige Stromverbraucher im Gebäude während einem Stromausfall zu versorgen.

Anhand von ersten Steuerinformationen ci1 steuert die Anlagensteuerung EC1 eine Stromversorgungseinheit SV (z. B. Frequenzumrichter (ACVF), welche mit einer Antriebseinheit GM verbunden ist, die in vorzugsweise Ausgestaltungen nicht nur als Motor (motorischer Betrieb), sondern auch als Generator (generatorischer Betrieb) arbeiten kann. Durch Zuschaltung von elektrischem Strom wird die Antriebseinheit GM aktiviert, welche in der Folge, die zugehörige Kabine C1 nach oben oder unten fährt. Die ersten Steuerinformationen ci1 können Tarif-, Status- oder andere Informationen (z. B. Einsteigestockwerk, Zielstockwerk), oder eine Kombination dieser Informationen beinhalten. In Fig. 2 ist die Antriebseinheit GM der Übersichtlichkeit wegen getrennt von einer Tragmittelführung gezeigt. Es versteht sich jedoch, dass die Antriebseinheit GM und die Tragmittelführung in einer Einheit integriert sein können, z. B. kann eine Rotorachse der Antriebseinheit eine oder mehrere Treibzonen haben, die auf die Tragmittel T einwirken, um die Aufzugskabine C1 auf oder ab zu bewegen. In Fig. 2 ist nur eine Antriebseinheit GM gezeigt, es versteht sich jedoch, dass in einem Ausführungsbeispiel jede Aufzugeinheit E1, ..., En eine Antriebseinheit GM hat.

Die Anlagensteuerung EC1 allein oder in Kombination mit einem lokalen Aufzugsenergiemanagementsystem wertet diese Informationen aus, u. a. um damit den Betrieb der Aufzugsanlage ES 1 bzgl. Energiekonsum zu optimieren. Der Energie- oder Leistungskonsum der Aufzugsanlage ES 1 kann beispielsweise durch eine oder mehrere der folgenden Massnahmen verändert und optimiert werden: die Fahrgeschwindigkeit und/oder die Beschleunigung der Kabine C1 kann reduziert werden, der Start (bzw. Startzeitpunkt) einer Fahrt kann zeitlich verzögert werden oder es können gezielt Leerfahrten durchgeführt werden. Gezielte Leerfahrten können dazu dienen, um in der Aufzugsanlage ES1 gespeicherte potentielle Energie (d. h. das schwerere Gegengewicht CW1 ist im obersten Stockwerk) freizusetzen. Im Generatorbetrieb zieht das schwerere Gegengewicht CW1 die leichtere Aufzugskabine C1 nach oben, und die dabei erzeugte elektrische Energie wird ins Stromversorgungsnetz SG gespeist, um dafür eine Vergütung für eingespeiste Energie zu erhalten, oder von dort aufzunehmen, um z. B. einen günstigen Tarif für bezogene Energie auszunützen. Um letztere Massnahme zu nutzen, hat die Aufzugsanlage ES1 in einem Ausführungsbeispiel mindestens ein Energiespeichersystem ESS. Das Energiespeichersystem ESS kann beispielsweise bei günstigem Tarif vom Stromversorgungsnetz SG geladen werden und, falls ein entsprechendes Vergütungsmodel besteht, bei hohen Tarifen Energie zurück ins Stromversorgungsnetz SG speisen. Alternativ dazu kann die gespeicherte Energie auch dazu genutzt werden, um die Aufzugsanlage ES 1 bei hohen Tarifen oder einem Stromausfall mit Energie zu versorgen und damit die Aufzugsanlage ES1 zu betreiben.

Die Anlagensteuerung EC1 kann auch als Gruppensteuerung ausgestaltet sein, die mehr als eine Aufzugseinheit, also eine Gruppe von Aufzugseinheiten E1, ..., En steuert. Die Steuerung dieser Gruppe erfolgt in bekannter Weise durch die Gruppensteuerung, beispielsweise teilt die Gruppensteuerung einen Transportwunsch ("Ruf") einer Person einem der Aufzugseinheiten E1, ..., En zu, z. B. einer mit einer Aufzugskabine C1, die momentan die kürzeste Distanz zum Einsteigestockwerk hat. In Kombination mit einem Energiemanagementsystem kann die Gruppensteuerung die vorstehend genannten Massnahmen zur Optimierung des Energie- oder Leistungskonsums implementieren. Zusätzlich zu diesen Massnahmen kann die Gruppensteuerung "gruppenspezifische" Massnahmen implementieren, um den Betrieb der Gruppe zu optimieren, z. B. eine oder mehrere der folgenden Massnahmen: die gezielte Auslösung von gleichzeitigen motorischen und generatorischen Fahrten, die zeitliche Verzögerung der Startzeitpunkte einzelner Aufzugseinheiten E1, ..., En, die Anpassung der Kabinenlast durch eine gezielte Verteilung der Personen auf mehrere Aufzugseinheiten E1, ..., En oder die Auswahl von einzelnen Aufzugseinheiten E1, ..., En, die Leerfahrten durchzuführen haben, um Energie ins Stromnetz zu speisen resp. aufzunehmen, oder ein Energiespeichersystem ESS zu laden.

Die verschiedenen Massnahmen können in der Anlagensteuerung EC1, dem Energiemanagementsystem oder einer Kombination aus Anlagensteuerung EC1 und Energiemanagementsystem implementiert werden. Die Anlagensteuerung EC1 hat einen Prozessor/Computer mit einem zugeordneten computerlesbaren Datenspeicher. Der Datenspeicher speichert ein vom Prozessor ausführbares Computerprogramm mit Programmcodeanweisungen, die zur Ausführung der verschiedenen Massnahmen dienen.

In einem Ausführungsbeispiel ist die Aufzugsanlage ES1 anfangs im Normalbetrieb, d.h. es liegt keine Anforderung von der Netzsteuerung SGC bezüglich einer Lastabschaltung vor und der Tarif für Energie ist auf Normalniveau. In diesem Normalbetrieb wird das Energiespeichersystem ESS, wenn er nicht bereits geladen ist, mit kleiner Leistung aufgeladen, so dass sein Ladezustand beispielsweise bei ca. 70% der Maximalkapazität liegt.

Ein Sonderbetrieb liegt dagegen vor, wenn die Netzsteuerung SGC eine Lastabschaltung anfordert, z. B. zu einem Zeitpunkt, an dem die Netzbelastung relativ hoch ist und dem zufolge der Tarif hoch sein kann. In einem solchen Sonderbetrieb wird das Aufladen des Energiespeichersystems ESS unterbrochen oder erst gar nicht gestartet. Zudem kann die Beschleunigung oder die Geschwindigkeit der Aufzugskabine C1, ..., Cn, oder beides, soweit reduziert werden, dass die gesamte für den Aufzugsbetrieb notwendige Leistung aus dem Energiespeichersystem ESS bezogen werden kann. In diesem Fall ist die Aufzugsanlage ES1 aus Sicht der Netzsteuerung SGC abgeschaltet, da sie keine Energie aus dem Stromversorgungsnetz SG entnimmt.

In der Aufzugsanlage ES 1 oder in dem Energiemanagementsystem kann ein Schwellenwert für den Tarif festgelegt sein. Übersteigt der Tarif diesen Schwellenwert, kann definiert sein, dass das Energiespeichersystem ESS bis zu einer unteren Grenze entladen wird, und zwar so, dass die restliche Energie im Energiespeichersystem ESS für weitere Aufzugsfahrten genügt. Es kann aber auch eine Aufzugs(leer)fahrt ins oberste Stockwerk ausgelöst werden. Da eine Aufzugsanlage üblicherweise so dimensioniert ist, dass das Gegengewicht CW1 schwerer als eine leere Kabine C1 ist, kann bei leerer Kabine dadurch zusätzlich Energie gewonnen und ins Stromversorgungsnetz SG gespeist werden.

Die Netzsteuerung SGC kann auch eine Lasteinschaltanfrage zur Aufzugsanlage ES1 senden. Sendet die Netzsteuerung SGC eine solche Lasteinschaltanfrage oder sinkt der Tarif unter einen festgelegten Schwellenwert für den Tarif, der beispielsweise gleich dem vorstehend genannten Schwellenwert sein kann, wird das Energiespeichersystem ESS mit grösserer Leistung geladen, beispielsweise fast bis zur maximalen Kapazität. Der Grad der Aufladung kann dabei so gewählt werden, dass das Energiespeichersystem ESS bei einer folgenden Fahrt nicht überladen wird, wenn die Aufzugsanlage ES1 im generatorischen Betrieb ist. Zusätzlich oder alternativ kann eine Aufzugs(leer)fahrt ins unterste Stockwerk ausgelöst werden. Bei leerer Kabine C1 kann dadurch zusätzlich elektrische Energie verbraucht werden, die dazu benötigt wird, um die leichtere Kabine C1 gegen das schwerere Gegengewicht CW1 nach unten zu bewegen.

Die beschriebenen Massnahmen zum Optimieren des Betriebs einer Aufzugsanlage können auch im in Fig. 1 gezeigten Verbund von mehreren Aufzugsanlagen ES 1, ..., ESn zur Anwendung kommen. In einem solchen Verbund melden in einem Ausführungsbeispiel alle Teilnehmer (d.h. alle Aufzugsanlagen ES1, ..., ESn) jeweils ihren aktuellen Status und ihre aktuelle Leistungsaufnahme/-abgabe laufend an eine zentrale Steuereinheit, z. B. der Überwachungseinheit NM. Ein Dienstleister, beispielsweise einer oder mehrere der Energielieferanten SGS, kann dann allfällige Regelreserven auf dem Markt anbieten und die Leistungskurve des Verbundes zentral steuern. Für die einzelnen Aufzugsanlagen ES1, ..., ESn lassen sich so neue Tarifmodelle entwickeln. Die Verbundleistung kann durch folgende Massnahmen beeinflusst werden: Variation des Verhältnisses von motorischen zu generatorischen Fahrten, Reduktion/Erhöhung der Fahrgeschwindigkeit, Reduktion/Erhöhung der Beschleunigung, zeitliche Verzögerung des Fahrtstarts von Kabinen C1, ..., Cn einzelner Aufzugsanlagen ES1, ..., ESm, Auslösung gezielter Leerfahrten, um Energie ins Netz einzuspeisen oder zu beziehen, und Anpassung der Kabinenlast durch gezielte Personenverteilung (bei Gruppensteuerungen).

Die Aufzugsanlage ES1 kann in verschiedenen Betriebsarten betrieben werden. In einer ersten Betriebsart erfolgt ein ausschliesslich motorischer Betrieb, für den Energie aus dem Stromversorgungsnetz SG bezogen wird. Sofern in den Aufzugseinheiten E1, ..., En potentielle Energie gespeichert ist (d.h. eine Aufzugskabine C1 ist im untersten Stockwerk), kann die Aufzugsanlage ES1 in der zweiten Betriebsart rein generatorisch betrieben werden. Dazu werden die Aufzugseinheiten E1, ..., En, in denen Energie gespeichert ist, in Gang gesetzt und die Antriebseinheit GM als Generator betrieben, welcher über die Stromversorgungseinheit SV Energie ins Stromversorgungsnetz SG zurück speist oder das Energiespeichersystem ESS auflädt. Ferner ist ein Mischbetrieb möglich, bei dem einzelne Aufzugseinheiten E1, ..., En Energie abgeben und andere Energie aufnehmen.

Es versteht sich, dass nicht jede der beschriebenen Massnahmen zum Optimieren des Betriebs einer Aufzugsanlage ES1, ..., ESm oder jede Betriebsart in einer Aufzugsanlage ES1, ..., ESm implementiert sein muss. Die einzelnen Massnahmen und Betriebsarten können - abhängig von jeweilige Gegebenheiten - nahezu unabhängig voneinander in einer Aufzugsanlage ES1, ..., ESm implementiert sein.

In Fig. 2 ist ferner gezeigt, dass die Aufzugsteuerung EC1 über ein Kommunikationsnetz CN mit der Überwachungseinheit NM des Stromversorgungsnetzes SG kommuniziert und von dieser zweite Steuerinformationen ci2 erhält. Diese Steuerinformationen ci2 werden von der Überwachungseinheit NM in Abhängigkeit des Zustandes des Stromversorgungsnetzes SG festgelegt.

Für die Verarbeitung der ersten und zweiten Steuerinformationen ci1 und ci2 kann zwischen dem Betreiber der Aufzugsanlage ES1 und dem Betreiber des Stromversorgungsnetzes SG vorzugsweise ein symbolisch gezeigtes Protokoll P_{ES1} erstellt werden, in dem die Prioritäten der ersten und zweiten Steuerinformationen ci1, ci2 festgelegt sind. Gemäss Protokoll P_{ES1} können zweite Steuerinformationen ci2, welche einen Notfall des Stromversorgungsnetzes SG betreffen, prioritär behandelt und unverzüglich ausgeführt werden. Hingegen kann beispielsweise in einem Spital einer der Aufzugseinheiten höchste Priorität zugeordnet werden, die für Notfälle reserviert ist. Ferner können finanzielle Aspekte, wie Vergütungen und vorteilhafte Tarife, bei der Festlegung des Protokolls P_{ES1} berücksichtigt werden. Das hier beschriebene Verfahren erlaubt daher einen vorteilhaften Betrieb jeder Aufzugsanlage ES1, ..., ESm, die an die Bedürfnisse des Anwenders individuell angepasst ist, und die gleichzeitige Nutzung der Aufzugsanlage zur Stabilisierung des Stromversorgungsnetzes SG.

Ein Ausführungsbeispiel des Verfahrens wird nachstehend anhand des Diagramms von Fig. 3 näher erläutert. Im Diagramm ist die innerhalb des Stromversorgungsnetzes SG zur Verfügung stehende Regelenergie ER einfach schraffiert dargestellt. Unterhalb und oberhalb des Regelbandes sind die zusätzliche positive Regelenergie EA_{R+} sowie die zusätzliche negative Regelenergie EA_{R-} eingezeichnet, die von den Aufzugsanlagen ES1, ..., ESn zur Verfügung gestellt wird. Diese zusätzlichen Anteile der Regelenergie ER sind verhältnismässig klein, haben aber den Vorteil, dass sie dezentral und sehr schnell einsetzbar sind, um das Stromversorgungsnetz SG zu stabilisieren. Die positive und negative Regelenergie EA_{R+}, EA_{R-} der Aufzugsanlagen ES1, ..., ESn sind daher den sehr schnell einsetzbaren Primärreserven zuzurechnen, die für die Stabilisierung des Stromversorgungsnetzes SG besonders wichtig sind. Dadurch können die ansonsten trägen Regelungsvorgänge im Stromversorgungsnetz SG überbrückt werden und Netzschwankungen vermieden werden.

Im Diagramm ist gezeigt, dass die Überwachungseinheit NM zum Zeitpunkt t1 einen starken Anstieg der Last feststellt. Ferner wird festgestellt, dass die Last sich der Grenze der Regelenergie bzw. der Regelleistung nähert, weshalb die Überwachungseinheit NM zweite Steuerinformationen ci2_{A} an die Aufzugsteuerungen EC1, ..., ECm der Aufzugsanlagen ES1, ..., ESm sendet und diesen einen Energieengpass signalisiert. Unter Berücksichtigung des Betriebsprotokolls P_{ES1} können nun die zweiten Steuerinformationen ci2_{A} zum Beispiel mit erhöhter Priorität, d.h. vorrangig vor den ersten Steuerinformationen ci1 behandelt werden. In diesem Fall werden die Steuerinformationen ci2_{A} als Steuerkommandos interpretiert, die baldmöglichst ausgeführt werden. Die Aufzugsteuerung EC1, ..., ECm ermittelt nun die in den Aufzugseinheiten E1, ..., En gespeicherte Energie (im Energiespeichersystem ESS gespeicherte elektrische Energie oder Energie in Form von potentieller Energie) und/oder den Energiebedarf für die von den Anwendern angeforderten Transporte/Fahrten und steuert die Aufzugseinheiten E1, ..., En derart, dass beispielsweise zuerst die Transporte ausgeführt werden, die einen generatorischen Betrieb der Aufzugsanlage ES1, ..., ESm erlauben oder den geringsten Energiebedarf aufweisen. Zusätzlich oder alternativ kann die Überwachungseinheit NM bzw. die Aufzugsteuerung EC1, ..., ECm den parallelen Betrieb der Aufzugseinheiten E1, ..., En temporär einschränken und eine der Aufzugseinheiten E1, ..., En stilllegen. Für die zum Zeitpunkt t1 festgestellte Lastsituation LS_{A} wird mit dem zweiten Steuersignalen ci2_{A} daher bewirkt, dass die Aufzugsanlagen ES1, ..., ESm sparsam betrieben werden. In Fig. 3 ist symbolisch dargestellt, dass es anhand der genannten Massnahmen vermieden werden kann, die Reserven der Regelenergie ER des Stromversorgungsnetzes SG auszuschöpfen.

Zu dem im Diagramm von Fig. 3 bezeichneten Zeitpunkt t2 stellt die Überwachungseinheit NM eine geringe Belastung des Stromversorgungsnetzes SG fest und signalisiert mittels der zweiten Steuerinformationen ci2_{B} einen Energieüberschuss. Bei Erhalt dieser Information, die mit reduzierter Priorität behandelt werden kann, werden die Aufzugseinheiten E1, ..., En von der Aufzugsteuerung EC1, ..., ECm in eine Lage gefahren, in der sie eine erhöhte potentielle Energie aufweisen bzw. negative Regelenergie ER_ absorbieren.

Für den Zeitpunkt t3 sind im Diagramm zwei Anomalien aufgezeigt, die alternativ auftreten können. Einerseits kann bei der Lastsituation LS_{C} eine Lastspitze oder auch ein Ausfall eines Energielieferanten SGS auftreten, weshalb das Stromversorgungsnetz SG zusammenzubrechen droht. In diesem Fall signalisiert die Überwachungseinheit NM mit den zweiten Steuerinformationen ci2C einen Energiebedarf, wonach jede adressierte Aufzugsteuerung EC1, ..., ECm die in den Aufzugseinheiten E1, ..., En gespeicherte potentielle Energie ermittelt und die Aufzugseinheiten E1, ..., En vorzugsweise mit höchster Priorität derart steuert, dass gespeicherte potentielle Energie freigegeben und durch generatorischen Betrieb der zugehörigen Antriebseinheiten GM in Form von elektrischer Energie an das Stromversorgungsnetz SG zurück gespeist wird. Für den generatorischen Betrieb werden die Antriebseinheiten GM bzw. die darin verwendeten Drehstrommaschinen, Asynchronmaschinen oder Synchronmaschinen, in bekannter Weise als Drehstromgeneratoren betrieben.

Im Diagramm von Fig. 3 ist mit Pfeilen gezeigt, dass die Aufzugsanlagen ES 1, ..., ESm nach dem Zeitpunkt t2 negative Regelenergie EA_{R-} speichern und nach dem Zeitpunkt t3 positive Regelenergie EA_{R+} abgeben, um die Spitzenbelastung oder den Ausfall der Stromlieferanten SGS zu kompensieren.

Die Betriebsart der Aufzugsanlagen ES1, ..., ESm wird daher unter Berücksichtigung des Zustandes des Stromversorgungsnetzes SG zu dessen Stabilisierung gewählt. Während Engpässen werden Belastungen des Stromversorgungsnetzes vermieden oder beschränkt. Während eines Energieüberschusses wird Energie aufgenommen und nicht freigesetzt. Dadurch werden aus der Sicht des Betreibers des Stromversorgungsnetzes die angeschlossenen Aufzugsanlagen ES 1, ..., ESm vorteilhaft in das Regelungssystem des Stromversorgungsnetzes SG integriert. Der Betrieb der Aufzugsanlagen ES1, ..., ESm wird somit mit dem Stromversorgungsnetz SG harmonisiert.

Im Diagramm von Fig. 3 ist weiter gezeigt, dass die Überwachungseinheit NM bei der Bereitstellung der zweiten Steuerinformationen ci2 vorzugsweise weitere Bedingungen berücksichtigt. Vorzugsweise registriert die Überwachungseinheit NM den Verlauf der zur Verfügung stehenden Regelenergie ER. Sofern das Potenzial der Regelenergie ER ansteigt, kann bei erhöhter Belastung des Stromversorgungsnetzes SG darauf verzichtet werden, die Aufzugsanlagen ES1, ..., ESm in eine andere Betriebsart zu überführen. Stattdessen wird die Energielieferung eines der Kraftwerke SGS erhöht.

Zu den im Diagramm eingezeichneten Zeitpunkt t4 hat die Überwachungseinheit NM festgestellt, dass sich die Kapazität der Regelenergie ER zum Beispiel durch Zuschaltung eines Kraftwerks SGS schrittweise erhöht hat. Zum Zeitpunkt t5, zu dem wiederum derselbe Lastanstieg wie zum Zeitpunkt t1 festgestellt wurde, verzichtet die Überwachungseinheit NM daher auf die Abgabe derselben zweiten Steuerinformationen ci2. Die Überwachung des Zustandes des Stromversorgungsnetzes SG umfasst daher vorzugsweise nicht nur die unmittelbare Überwachung der Belastung des Stromversorgungsnetzes SG, sondern auch den Zustand der Stromlieferanten SGS sowie entsprechende Energieprognosen.

Im Diagramm von Fig. 3 ist zum Zeitpunkt t6 ferner ein Vorgang illustriert, der bei konventionell betriebenen Stromversorgungsnetzen und Aufzugsanlagen ES 1, ..., ESm eintreten kann, die unabhängig voneinander betrieben werden. Dabei besteht eine relativ hohe Wahrscheinlichkeit, dass in entsprechenden zeitlichen Abständen Aufzugsanlagen ES1, ..., ESm gleichzeitig in Betrieb gesetzt werden, weshalb die in Fig. 3 gezeigte Lastspitze zum Zeitpunkt t6 auftreten könnte, durch die das Stromversorgungsnetz SG zumindest in einem Teilbereich destabilisiert wird.

In einen Ausführungsbeispiel wird jedoch vorgesehen, dass eine solche Spitzenbelastung gar nicht eintreten kann, weshalb die Lastspitze zum Zeitpunkt t6 durchgestrichen gezeigt ist. Anhand des Verfahrens wird nämlich vorgesehen, dass die Aufzugsteuerungen EC1, ..., ECm der Überwachungseinheit NM die gemäss den ersten Steuerinformationen ci1 angeforderten Transporte sowie vorzugsweise den zugehörigen Energiebedarf melden. Die Überwachungseinheit NM registriert die angeforderten Transporte und erstellt einen Plan zu deren Durchführung, durch den die Freigabe der angeforderten Transporte derart vorgesehen wird, dass ein ausgeglichener Energiebedarf resultiert und Lastspitzen vermieden werden.

Die Überwachungseinheit NM ordnet den angeforderten Transporten vorzugsweise Zeitmarken m1, ... , m4 zu und meldet diese den Aufzugsteuerungen EC1, ..., ECm. Die Transporte werden in der Folge verteilt zu den von der Überwachungseinheit NM festgelegten Zeitmarken m1, ... , m4 durchgeführt, weshalb Spitzenbelastungen durch zufälliges synchrones Anfahren der Aufzugsanlagen ES1, ..., ESm vermieden werden können. Damit die Transporte tatsächlich zu den von der Überwachungseinheit NM festgelegten Zeitmarken m1, m2, ... , m4 durchgeführt werden, wird von der Überwachungseinheit NM und den Aufzugsteuerungen EC1, ..., ECm vorzugsweise dieselbe Zeitbasis und ein gemeinsamer Zeittakt verwendet.

Zeitmarken können sowohl für die Durchführung von Lastvorgängen, als auch für die Durchführung von generatorischen Vorgängen, wie Leerfahrten zur Abgabe potentieller Energie, den Aufzugsanlagen ES1, ..., ESm übermittelt werden. Dabei kann vorgesehen werden, dass eine erste Aufzugsanlage ES1 einen Personentransport und eine zweite Aufzugsanlage ES2 zur Kompensation des Energiebedarfs eine Leerfahrt ausführt.

## Patentansprüche

1. Verfahren zur Steuerung wenigstens einer Aufzugsanlage (ES1, ..., ESm) mit wenigstens einer Aufzugseinheit (E1, ..., En), die an ein Stromversorgungsnetz (SG) angeschlossen ist, wobei die Aufzugsanlage (ES1, ..., ESm) mittels einer zugehörigen Aufzugsteuerung (EC1, ..., ECm) unter Berücksichtigung von ersten Steuerinformationen (ci1) steuerbar ist, die auf lokalen Anforderungen von Anwendern beruhen, und wobei die Aufzugsteuerung (EC1, ..., ECm) zweite Steuerinformationen (ci2) vom Stromversorgungsnetz (SG) empfängt, die Zustandsdaten für das Stromversorgungsnetz (SG) enthalten, wobei die ersten und die zweiten Steuerinformationen (ci1, ci2) durch die Aufzugsteuerung (EC1, ..., ECm) ausgewertet werden, und wobei ein durch die ersten Steuerinformationen (ci1) bestimmter Betrieb der Aufzugsanlage (ES1, ..., ESm) durch die Aufzugsteuerung (EC1, ..., ECm) in Abhängigkeit der zweiten Steuerinformationen (ci2) beeinflusst wird, um einen energetisch optimierten Betrieb zu ermöglichen.

2. Verfahren nach Anspruch 1, wobei mindestens eine Beschleunigung einer Aufzugskabine (C1, ..., Cn), eine Fahrgeschwindigkeit der Aufzugskabine (C1, ..., Cn), ein Startzeitpunkt einer Kabinenfahrt und ein Parallelbetrieb von mehreren Aufzugseinheiten (E1, ..., En) beeinflusst werden.

3. Verfahren nach einem der vorhergehenden Ansprüche, wobei die Aufzugsteuerung (EC1, ..., ECm) den Betrieb der Aufzugsanlage (ES 1, ..., ESm) derart beeinflusst, dass eine Aufzugskabine (C1, ..., Cn) eine Leerfahrt durchführt, um elektrische Energie aus dem Stromversorgungsnetz (SG) aufzunehmen und in der Aufzugsanlage (ES1, ..., ESm) als potentielle Energie zu speichern, oder elektrische Energie ins Stromversorgungsnetz (SG) zu speisen.

4. Verfahren nach Anspruch 3, wobei die potentielle Energie in einem generatorischen Betrieb der Aufzugsanlage (ES1, ..., ESm) in elektrische Energie gewandelt wird und entweder ins Stromversorgungsnetz (SG) geleitet wird oder ein Energiespeichersystem (ESS) geladen wird.

5. Verfahren nach Anspruch 4, wobei das Energiespeichersystem (ESS) vom Stromversorgungsnetz (SG) geladen wird.

6. Verfahren nach einem der Ansprüche 1 - 3, wobei an das Stromversorgungsnetz (SG) eine Überwachungseinheit (NM) angeschlossen ist, wobei die Überwachungseinheit (NM) in Abhängigkeit einer Belastung des Stromversorgungsnetzes (SG) die zweite Steuerinformationen (ci2) für die wenigstens eine Aufzugsteuerung (EC1, ..., ECm) erstellt und der Aufzugsteuerung (EC1, ..., ECm) übermittelt, wonach die Aufzugsanlage (ES1, ..., ESm) entsprechend den ersten und den zweiten Steuerinformationen (ci1, ci2) derart gesteuert wird, dass der Bedarf an Regelenergie (ER) für das Stromversorgungsnetz (SG) reduziert wird.

7. Verfahren nach Anspruch 6, wobei die die ersten und zweiten Steuerinformationen (ci1; ci2) von der Aufzugsteuerung (EC1, ..., ECm) geprüft werden, wobei gemäss einem Betriebsprotokoll eine Prioritätenliste erstellt wird und wobei mittels der ersten und zweiten Steuerinformationen (ci1; ci2) übermittelte Aufträge anhand der Prioritätenliste abgearbeitet werden.

8. Verfahren nach Anspruch 6 oder 7, wobei die Aufzugsanlage (ES1, ..., ESm) entsprechend den ersten und den zweiten Steuerinformationen (ci1, ci2) derart gesteuert wird, dass diese Regelenergie an das Stromversorgungsnetz (SG) abgibt oder Regelenergie von diesem aufnimmt, um das Stromversorgungsnetz (SG) zu stabilisieren.

9. Verfahren nach Anspruch 8, wobei bei geringer Belastung des Stromversorgungsnetzes (SG) mittels der zweiten Steuerinformationen (ci2) ein Energieüberschuss signalisiert wird, wonach die Aufzugsteuerung (EC1, ..., ECm) die Aufzugseinheiten (E1, ..., En) in eine Lage fährt, in der sie eine erhöhte potentielle Energie aufweisen und/oder dass bei hohen Belastungen des Stromversorgungsnetzes (SG) mittels der zweiten Steuerinformationen (ci2) ein Energieengpass signalisiert wird, wonach die Aufzugsteuerung (EC1, ..., ECm) in den Aufzugseinheiten (E1, ..., En) gespeicherte potentielle Energie und/oder einen Energiebedarf für von den Anwendern angeforderten Transporte ermittelt und die Aufzugseinheiten (E1, ..., En) derart steuert, dass zuerst die Transporte ausgeführt werden, die einen generatorischen Betrieb der Aufzugsanlage (ES1, ..., ESm) erlauben oder den geringsten Energiebedarf aufweisen und/oder dass die Aufzugsteuerung (EC1, ..., ECm) den parallelen Betrieb der Aufzugseinheiten (E1, ..., En) temporär einschränkt.

10. Verfahren nach Anspruch 9, wobei bei einem Ausfall eines Energielieferanten (SGS) oder bei einer Spitzenbelastung des Stromversorgungsnetzes (SG) mittels der zweiten Steuerinformationen (ci2) ein Energiebedarf signalisiert wird, wonach die Aufzugsteuerung (EC1, ..., ECm) die in den Aufzugseinheiten (E1, ..., En) gespeicherte potentielle Energie ermittelt und die Aufzugseinheiten (E1, ..., En) vorzugsweise mit höchster Priorität derart steuert, dass gespeicherte potentielle Energie freigegeben und durch generatorischen Betrieb der zugehörigen Antriebseinheiten (GM) in Form von elektrischer Energie an das Stromversorgungsnetz (SG) zurück gespeist wird.

11. Verfahren nach Anspruch 10, wobei nach der Signalisierung eines Energiebedarfs von der Aufzugsteuerung (EC1, ..., ECm) eine Leerfahrt mit wenigstens einer der Aufzugseinheiten (E1, ..., En) ausgeführt wird, in der potentielle Energie gespeichert ist, um Energie in das Stromversorgungsnetz (SG) zurück zu speisen.

12. Verfahren nach einem der Ansprüche 6 - 11, wobei wenigstens zwei Aufzugsteuerungen (EC1, ..., ECm) der Überwachungseinheit (NM) die gemäss den ersten Steuerinformationen (ci1) angeforderten Transporte sowie einen zugehörigen Energiebedarf melden und die Überwachungseinheit (NM) eine Freigabe der angeforderten Transporte unter Berücksichtigung eines Standorts der Aufzugsanlagen (ES 1, ..., ESm) derart vergibt, dass die Transporte zu unterschiedlichen Zeitpunkten ausgeführt werden und der Energiekonsum innerhalb des Stromversorgungsnetzes geglättet wird, wobei durch die Überwachungseinheit (NM) den angeforderten Transporten Zeitmarken zuordnet werden, wonach die Aufzugsteuerungen (EC1, ..., ECm) die Transporte jeweils zu den mit den Zeitmarken bezeichneten Zeitpunkten starten.

13. Verfahren nach einem der Ansprüche 6 - 12, wobei mit den zweiten Steuerinformationen (ci2) ein zulässiger Energieverbrauch oder aktuelle Tarife für den Energieverbrauch zur Aufzugsteuerung (EC1, ..., ECm) übertragen werden, welche beim Vorliegen tieferer Tarife die Aufzugseinheiten (E1, ..., En) in eine Lage fährt, in der sie eine erhöhte potentielle Energie aufweisen, die beim Vorliegen höherer Tarife wieder abgegeben wird.

14. Verfahren nach einem der Ansprüche 6 - 13, wobei gespeicherte Energiereserven der Überwachungseinheit (NM) von der Aufzugsteuerung (EC1, ..., ECm) gemeldet werden, und die Überwachungseinheit (NM) das Stromversorgungsnetz (SG) unter Berücksichtigung der gemeldeten Energiereserven steuert.

15. Verfahren nach einem der Ansprüche 6 - 14, wobei ein Energiespeichersystem (ESS) für elektrische Energie derart gesteuert wird, dass es vom Stromversorgungsnetz (SG) oder von in der Aufzugsanlage (ES1, ..., ESm) erzeugter elektrischer Energie geladen oder durch Abgabe von elektrischer Energie entladen wird.

16. Aufzugsanlage (ES1, ..., ESm) mit wenigstens einer Aufzugseinheit (E1, ..., En), die mittels einer Aufzugsteuerung (EC1, ..., ECm) unter Berücksichtigung von ersten Steuerinformationen (ci1) steuerbar ist, die auf lokalen Anforderungen der Anwender beruhen, wobei die Aufzugsanlage (ES1, ..., ESm) an ein Stromversorgungsnetz (SG) anschliessbar ist, wobei die Aufzugsanlage (ES1, ..., ESm) mittels der Aufzugsteuerung (EC1, ..., ECm) unter Berücksichtigung von ersten Steuerinformationen (ci1) steuerbar ist, die auf lokalen Anforderungen von Anwendern beruhen, und wobei die Aufzugsteuerung (EC1, ..., ECm) zweite Steuerinformationen (ci2) vom Stromversorgungsnetz (SG) empfängt, die Zustandsdaten für das Stromversorgungsnetz (SG) enthalten, wobei die Aufzugsteuerung (EC1, ..., ECm) die ersten und die zweiten Steuerinformationen (ci1, ci2) auswertet werden, und wobei die Aufzugsteuerung (EC1, ..., ECm) einen durch die erste Steuerinformationen (ci1) bestimmten Betrieb der Aufzugsanlage (ES1, ..., ESm) in Abhängigkeit der zweiten Steuerinformationen (ci2) beeinflusst, um einen energetisch optimierten Betrieb zu ermöglichen.

17. Verbundsystemen mit wenigstens zwei Aufzugsanlagen (ES1, ..., ESm) gemäss Anspruch 16, die an ein gemeinsames Stromversorgungsnetz (SG) angeschlossen und über wenigstens ein Kommunikationsnetz (CN) mit einer Überwachungseinheit (NM) verbunden sind, mittels dessen Zustandsdaten für das Stromversorgungsnetz (SG) ermitteltbar und die Aufzugsanlagen (ES1, ..., ESm) nach dem Verfahren gemäss einem der Ansprüche 1-15 steuerbar sind.

## Claims

1. Method of controlling at least one lift installation (ES1, ..., ESm) with at least one lift unit (E1, ..., En), which is connected with a power supply mains (SG), wherein the lift installation (ES1, ..., ESm) is controllable by means of a lift control (EC1, ..., ECm), which belongs thereto, with consideration of first control information (ci1) based on local requirements of users, and wherein the lift control (EC1, ..., ECm) receives from the power supply mains (SG) second control information (ci2) containing status data for the power supply mains (SG), wherein the first and second control information (ci1, ci2) are evaluated by the lift control (EC1, ..., ECm) and wherein operation, which is determined by the first control information (ci1), of the lift installation (ES1, ..., ESm) is influenced by the lift control (EC1, ..., ECm) in dependence on the second control information (ci2) so as to enable operation optimised in terms of energy.

2. Method according to claim 1, wherein at least acceleration of a lift cage (C1, ..., Cn), travel speed of the lift cage (C1, ..., Cn), start time instant of a cage journey and parallel operation of a plurality of lift units (E1, ..., En) are influenced.

3. Method according to one of the preceding claims, wherein the lift control (EC1, ..., ECm) so influences operation of the lift installation (ES1, ..., ESm) that a lift cage (C1, ..., Cn) executes an empty run so as to receive electrical energy from the power supply mains (SG) and store it in the lift installation (ES1, ..., ESm) as potential energy or to feed electrical energy to the power supply mains (SG).

4. Method according to claim 3, wherein the potential energy is converted in power-generating operation of the lift installation (ES1, ..., ESm) into electrical energy and either is conducted into the power supply mains (SG) or an energy storage system (ESS) is charged.

5. Method according to claim 4, wherein the energy storage system (ESS) is charged by the power supply mains (SG).

6. Method according to any one of claims 1 to 3, wherein a monitoring unit (NM) is connected with the power supply mains (SG), and wherein the monitoring unit (NM) creates the second control information (ci2) for the at least one lift control (EC1, ..., ECm) in dependence on loading of the power supply mains (SG) and transmits the information to the lift control (EC1, ..., ECm), in accordance with which the lift installation (ES1, ..., ESm) is so controlled in correspondence with the first and second control information (ci1, ci2) that the requirement for regulating energy (E_{R}) for the power supply mains (SG) is reduced.

7. Method according to claim 6, wherein the first and second control information (ci1, ci2) are checked by the lift control (EC1, ..., ECm), wherein a priority list is created in accordance with an operation protocol and wherein requests transmitted by means of the first and second control information (ci1, ci2) are worked through on the basis of the priority list.

8. Method according to claim 6 or 7, wherein the lift installation (ES1, ..., ESm) is so controlled in correspondence with the first and second control information (ci1, ci2) that this delivers regulating energy to the power supply mains (SG) or receives regulating energy therefrom so as to stabilise the power supply mains (SG).

9. Method according to claim 8, wherein in the case of low loading of the power supply mains (SG) an energy excess is signalled by means of the second control information (ci2), in accordance with which the lift control (EC1, ..., ECm) moves the lift units (E1, ..., En) into a position in which they have increased potential energy and/or that in the case of high loadings of the power supply mains (SG) an energy bottleneck is signalled by means of the second control information (ci2), in accordance with which the lift control (EC1, ..., ECm) determines potential energy stored in the lift units (E1, ..., En) and/or an energy requirement for transportations required by the users and so controls the lift units (E1, ..., En) that initially those transportations are executed which allow power-generating operation of the lift installation (ES1, ..., ESm) or have the lowest energy requirement and/or that the lift control (EC1, ..., ECm) temporarily restricts parallel operation of the lift units (E1, ..., En).

10. Method according to claim 9, wherein in the case of failure of an energy supplier (SGS) or in the case of peak loading of the power supply mains (SG) an energy requirement is signalled by means of the second control information (ci2), in accordance with which the lift control (EC1, ..., ECm) determines the potential energy stored in the lift units (E1, ..., En) and so controls the lift units (E1, ..., En) preferably with highest priority that stored potential energy is liberated and through power-generating operation of the associated drive units (GM) is fed back in the form of electrical energy to the power supply mains (SG).

11. Method according to claim 10, wherein after signalling of an energy requirement by the lift control (EC1, ..., ECm) an empty run is executed by at least one of the lift units (E1, ..., En) in which potential energy is stored so as to feed energy back to the power supply mains (SG).

12. Method according to any one of claims 6 to 11, wherein at least two lift controls (EC1, ... , ECm) report to the monitoring unit (NM) the transportations required in accordance with the first control information (ci1) as well as an associated energy requirement and the monitoring unit (NM) so allocates release of the required transportations with consideration of a location of the lift installations (ES1, ..., ESm) that the transportations are executed at different points in time and the energy consumption within the power supply mains is smoothed, wherein time marks are assigned by the monitoring unit (NM) to the required transportations, in accordance with which the lift controls (EC1, ..., ECm) start the transportations respectively at the points in time denoted by the time marks.

13. Method according to any one of claims 6 to 12, wherein a permissible energy consumption or currently applicable tariffs for the energy consumption is or are transmitted by the second control information (ci2) to the lift control (EC1, ..., ECm), which when lower tariffs apply moves the lift units (E1, ..., En) into a position in which they have an increased potential energy, which is delivered again when higher tariffs apply.

14. Method according to any one of claims 6 to 13, wherein stored energy reserves are reported to the monitoring unit (NM) by the lift control (EC1, ..., ECm) and the monitoring unit (NM) controls the power supply mains (SG) with consideration of the reported energy reserves.

15. Method according to any one of claims 6 to 14, wherein an energy storage system (ESS) for electrical energy is so controlled that it is charged by the power supply mains (SG) or by electrical energy generated in the lift installation (ES1, ..., ESm) or is discharged through delivery of electrical energy.

16. Lift installation (ES1, ..., ESm) with at least one lift unit (E1, ..., En), which is controllable by means of a lift control (EC1, ..., ECm) with consideration of first control information (ci1) based on local requirements of users, wherein the lift installation (ES1, ..., ESm) is connectible with a power supply mains (SG), wherein the lift installation (ES1, ..., ESm) is controllable by means of the lift control (EC1, ..., ECm) with consideration of first control information (ci1) based on local requirements of users, and wherein the lift control (EC1, ..., ECm) receives from the power supply mains (SG) second control information (ci2) containing status data for the power supply mains (SG), wherein the first and second control information (ci1, ci2) are evaluated by the lift control (EC 1, ..., ECm) and wherein the lift control (EC 1, ..., ECm) influences operation, which is determined by the first control information (ci1), of the lift installation (ES1, ..., ESm) in dependence on the second control information (ci2) so as to enable operation optimised in terms of energy.

17. Compound systems with at least two lift installations (ES1, ..., ESm) according to claim 16, which are connected with a common power supply mains (SG) and coupled by way of at least one communications network (CN) to a monitoring unit (NM), by means of which status data for the power supply mains (SG) are determinable and the lift installations (ES1, ..., ESm) are controllable in accordance with the method according to any one of claims 1 to 15.

## Revendications

1. Procédé pour commander au moins une installation d'ascenseur (ES1, ..., ESm) avec au moins une unité d'ascenseur (E1, ..., En) qui est raccordée à un réseau d'alimentation électrique (SG), selon lequel l'installation d'ascenseur (ES1, ..., ESm) est apte à être commandée à l'aide d'une commande d'ascenseur (EC1, ..., ECm) associée, en tenant compte de premières informations de commande (ci1) qui sont basées sur des demandes locales d'utilisateurs, et la commande d'ascenseur (EC1, ..., ECm) reçoit des secondes informations de commande (ci2) du réseau d'alimentation électrique (SG), qui contiennent des données d'état pour celui-ci, les premières et les secondes informations de commande (ci1, ci2) sont analysées par la commande d'ascenseur (EC1, ..., ECm), et un fonctionnement de l'installation d'ascenseur (ES1, ..., ESm) défini par les premières informations de commande (ci1) est influencé par la commande d'ascenseur (EC1, ..., ECm) en fonction des secondes informations de commande (ci2) afin de permettre un fonctionnement optimisé énergétiquement.

2. Procédé selon la revendication 1, selon lequel au moins une accélération d'une cabine d'ascenseur (C1, ..., Cn), une vitesse de circulation de la cabine d'ascenseur (C1, ..., Cn), un moment de démarrage d'un trajet de cabine et un fonctionnement parallèle de plusieurs unités d'ascenseur (ES1, ..., ESm) sont influencés.

3. Procédé selon l'une des revendications précédentes, selon lequel la commande d'ascenseur (EC1, ..., ECm) influence le fonctionnement de l'installation d'ascenseur (ES1, .., ESm) de telle sorte qu'une cabine d'ascenseur (C1, ..., Cn) effectue un trajet à vide pour recevoir de l'énergie électrique à partir du réseau d'alimentation électrique (SG) et la stocker comme énergie potentielle dans l'installation d'ascenseur (ES1, ..., ESm), ou pour charger de l'énergie électrique dans le réseau d'alimentation électrique (SG).

4. Procédé selon la revendication 3, selon lequel l'énergie potentielle, lors d'un fonctionnement de l'installation d'ascenseur (ES1, ..., ESm) en génératrice, est transformée en énergie électrique et est amenée dans le réseau d'alimentation électrique (SG), ou un système de stockage d'énergie (ESS) est chargé.

5. Procédé selon la revendication 4, selon lequel le système de stockage d'énergie (ESS) est chargé par le réseau d'alimentation électrique (SG).

6. Procédé selon l'une des revendications 1 à 3, selon lequel une unité de surveillance (NM) est raccordée au réseau d'alimentation électrique (SG), l'unité de surveillance (NM) crée en fonction d'une charge du réseau d'alimentation électrique (SG) les secondes informations de commande (ci2) pour la ou les commandes d'ascenseur (EC1, ..., ECm) et les transmet à celle(s)-ci, après quoi l'installation d'ascenseur (ES1, ..., ESm) est commandée selon les premières et les secondes informations de commande (ci1, ci2) de telle sorte que le demande d'énergie de réglage (E_{R}) pour le réseau d'alimentation électrique (SG) soit réduite.

7. Procédé selon la revendication 6, selon lequel les premières et les secondes informations de commande (ci1 ; ci2) sont contrôlées par la commande d'ascenseur (EC1, .., ECm), une liste de priorités est établie selon un protocole de fonctionnement, et des instructions transmises à l'aide des premières et des secondes informations de commande (ci1 ; ci2) sont traitées sur la base de la liste de priorités.

8. Procédé selon la revendication 6 ou 7, selon lequel l'installation d'ascenseur (ES1, ..., ESm) est commandée suivant les premières et les secondes informations de commande (ci1, ci2) de manière à transmettre une énergie de réglage au réseau d'alimentation électrique (SG) ou à recevoir de celui-ci de l'énergie de réglage, afin de stabiliser ledit réseau d'alimentation électrique (SG).

9. Procédé selon la revendication 8, selon lequel en cas de faible charge du réseau d'alimentation électrique (SG), un excédent d'énergie est signalé à l'aide des secondes informations de commande (ci2), après quoi la commande d'ascenseur (EC1, .., ECm) amène les installations d'ascenseur (ES1, .., ESm) dans une position dans laquelle elles présentent une énergie potentielle accrue, et/ou en cas de charges élevées du réseau d'alimentation électrique, (SG), une congestion d'énergie est signalée à l'aide des secondes informations de commande (ci2), après quoi la commande d'ascenseur (EC1, ..., ECm) détermine l'énergie potentielle stockée dans les unités d'ascenseur (E1, ..., En) et/ou une demande d'énergie pour les transports demandés par les utilisateurs, et commande les unités d'ascenseur (E1, ..., En) pour que soient effectués en premier les transports qui permettent un fonctionnement de l'installation d'ascenseur (ES1, ..., ESm) en génératrice ou qui présentent la plus faible demande d'énergie, et/ou la commande d'ascenseur (EC1, ..., ECm) limite temporairement le fonctionnement parallèle des unités d'ascenseur (E1, ..., En).

10. Procédé selon la revendication 9, selon lequel en cas de défaillance d'un fournisseur d'énergie (SGS) ou de charge de pointe du réseau d'alimentation électrique (SG), une demande d'énergie est signalée à l'aide des secondes informations de commande (ci2), après quoi la commande d'ascenseur (EC1, ..., ECm) détermine l'énergie potentielle stockée dans les unités d'ascenseur (E1, ..., Em) et commande celles-ci de préférence avec une priorité maximale de telle sorte que l'énergie potentielle stockée soit libérée et, grâce à un fonctionnement des unités d'entraînement associées (GM) en génératrices, soit ramenée sous forme d'énergie électrique dans le réseau d'alimentation électrique (SG).

11. Procédé selon la revendication 10, selon lequel après la signalisation d'une demande d'énergie par la commande d'ascenseur (EC1, ..., ECm), un trajet à vide est effectué avec l'une au moins des unités d'ascenseur (E1, ..., En) dans laquelle de l'énergie potentielle est stockée, pour ramener de l'énergie dans le réseau d'alimentation électrique (SG).

12. Procédé selon l'une des revendications 6 à 11, selon lequel au moins deux commandes d'ascenseur (EC1, ..., ECm) informent l'unité de surveillance (NM) des transports demandés selon les premières informations de commande (ci1), et d'une demande d'énergie associée, et l'unité de surveillance (NM) accorde une autorisation des transports demandés, en tenant compte d'une position des installations d'ascenseur (ES1, ..., ESm), de telle sorte que les transports soient effectués à des moments différents et que la consommation d'énergie soit lissée à l'intérieur du réseau d'alimentation électrique, et l'unité de surveillance (NM) affecte aux transports demandés des marqueurs temporels, après quoi les commandes d'ascenseur (EC1, .., ECm) démarrent les transports aux moments désignés par les marqueurs de temps.

13. Procédé selon l'une des revendications 6 à 12, selon lequel avec les secondes informations de commande (ci2), une consommation d'énergie autorisée ou les tarifs actuels pour la consommation d'énergie sont transmis à la commande d'ascenseur (EC1, .., ECm) qui, en présence de tarifs plus bas, amène les unités d'ascenseur (E1, ..., En) dans une position dans laquelle elles présentent une énergie potentielle accrue qui, en présence de tarifs plus élevés, est à nouveau fournie.

14. Procédé selon l'une des revendications 6 à 13, selon lequel des réserves d'énergie stockées de l'unité de surveillance (NM) sont signalées par la commande d'ascenseur (EC1, ..., ECm), et ladite unité de surveillance (NM) commande le réseau d'alimentation électrique (SG) en tenant compte des réserves d'énergie signalées.

15. Procédé selon l'une des revendications 6 à 14, selon lequel le système de stockage d'énergie (ESS) pour l'énergie électrique est commandé de manière à être chargé par le réseau d'alimentation électrique (SG) ou par l'énergie électrique produite dans l'installation d'ascenseur (ES1, ..., ESm), ou à être déchargé par la fourniture d'énergie électrique.

16. Installation d'ascenseur (ES1, .., ESm) avec au moins une unité d'ascenseur (E1, .., En) qui est apte à être commandée à l'aide d'une commande d'ascenseur (EC1, ..., ECm) en tenant compte de premières informations de commande (ci1) qui sont basées sur des demandes locales des utilisateurs, l'installation d'ascenseur (ES1, ..., ESm) étant apte à être raccordée à un réseau d'alimentation électrique (SG), l'installation d'ascenseur (ES1, ..., ESm) étant apte à être commandée à l'aide de la commande d'ascenseur (EC1, ..., ECm) en tenant compte de premières informations de commande (ci1) qui sont basées sur des demandes locales d'utilisateurs, et la commande d'ascenseur (EC1, .., ECm) recevant des secondes informations de commande (ci2) du réseau d'alimentation électrique (SG), qui contiennent des données d'état pour celui-ci, la commande d'ascenseur (EC1, ..., ECm) analysant les premières et les secondes informations de commande (ci1, ci2), et la commande d'ascenseur (EC1, ..., ECm) influençant un fonctionnement de l'installation d'ascenseur (ES1, ..., ESm), défini par les premières informations de commande (ci1), en fonction des secondes informations de commande (ci2) afin de permettre un fonctionnement optimisé énergétiquement.

17. Système à interconnexion avec au moins deux installations d'ascenseur (ES1, ..., ESm) selon la revendication 16 qui sont raccordées à un réseau d'alimentation électrique (SG) commun et qui sont reliées par au moins un réseau de communication (CN) à une unité de surveillance (NM), à l'aide duquel des données d'état pour le réseau d'alimentation électrique (SG) peuvent être déterminées, et les installations d'ascenseur (ES1, ..., ESm) peuvent être commandées suivant le procédé selon l'une des revendications 1 à 15.
